# NOUVEAU FASCICULE DE BREVET EUROPEEN

(11) **EP 0 715 567 B2**
(45) Date de publication et mention de la décision concernant l'opposition: **06.12.2000**
(45) Mention de la délivrance du brevet: 15.10.1997
(21) Numéro de dépôt: 95908820.4
(22) Date de dépôt: 24.08.1994
(51) Int. Cl.: B29C 49/42, B65G 47/84

(54) **INSTALLATION DE FABRICATION DE RECIPIENTS PAR SOUFFLAGE DE PREFORMES EN MATIERE PLASTIQUE**
VORRICHTUNG ZUR HERSTELLUNG VON BEHÄLTERN AUS KUNSTSTOFF DURCH BLASFORMEN
APPARATUS FOR MAKING CONTAINERS BY BLOW-MOULDING PLASTIC PARISONS

(30) Priorité: 26.08.1993 FR 9310265
(43) Date de publication de la demande: 12.06.1996
(73) Titulaire: SIDEL, Société Anonyme, 76053 Le Havre Cedex (FR)
(72) Inventeur: VALLES, Thierry, Sidel S.A., F-76053 Le Havre Cédex (FR)
(74) Mandataire: Siloret, Patrick
(86) Numéro de dépôt international: FR9401022
(87) Numéro de publication internationale: WO9505933

(56) Documents cités:
- EP-A- 0 026 895
- DE-A- 2 905 376
- DE-A- 3 529 716
- DE-C- 2 742 693
- FR-A- 2 024 764
- FR-A- 2 389 580
- FR-A- 2 394 381
- FR-A- 2 630 414
- GB-A- 2 004 805
- US-A- 2 331 687
- US-A- 4 313 720
- US-A- 4 313 905
- US-A- 4 790 741

## Description

L'invention est relative à une installation de fabrication de récipients, tels que des bouteilles, des pots, ou tout autre type de corps creux, par conditionnement thermique, puis soufflage de préformes en matière plastique.

Elle s'applique tout particulièrement à la fabrication de récipients en polyéthylènetéréphtalate (PET), qui sont obtenus par étirage-soufflage de préformes après qu'elles aient subi un conditionnement thermique approprié.

Les installations connues de fabrication par soufflage de préformes comportent un poste de conditionnement thermique des préformes, dans lequel les préformes sont portées à une température telles qu'elles puissent ensuite être déformées par soufflage, un poste d'amenée des préformes à ce poste de conditionnement, un poste de soufflage avec des moules dont l'empreinte possède la forme extérieure finale du récipient à obtenir, et un poste de transfert des préformes entre le poste de conditionnement thermique et le poste de soufflage.

Pour la plupart des matériaux, et notamment le PET, il est préférable d'effectuer de façon contrôlée, de manière concomitante au soufflage, un étirage de la préforme. Dans ce cas, le poste de soufflage est remplacé par un poste d'étirage-soufflage, comportant à la fois des moyens d'étirage, tels qu'une tige d'élongation, venant repousser le fond de la préforme de façon contrôlée au moment du soufflage.

Dans la suite de la description, le terme soufflage s'applique Indifféremment au soufflage seul ou à l'étirage-soufflage.

Il existe divers types d'installations de fabrication. Dans un type connu d'installation, le poste de soufflage est constitué à partir d'un dispositif monté en rotation autour d'un axe de révolution vertical. Ce dispositif, encore appelé roue ou carrousel de soufflage, en raison de son mouvement circulaire, comprend au moins deux moules identiques, avec chacun une cavité de moulage, répartis symétriquement et régulièrement par rapport à l'axe de rotation et portés chacun par un dispositif porte moule.

Ainsi, si deux moules sont présents, ils sont diamétralement opposés ; plus généralement, ils sont décalés d'un angle A déterminé par la relation suivante : A=360°/n dans lequel n est le nombre de moules.

Chaque moule est formé de deux demi-moules articulés autour d'un autre axe vertical porté par le carrousel, et montés de sorte que les moules s'ouvrent à la façon d'un portefeuille, selon un plan de symétrie radial, passant par l'axe de révolution du carrousel et par l'axe d'articulation des demi-moules, l'ouverture s'effectuant en direction de la périphérie de la roue de soufflage.

Ainsi, le document DE-A-2 742 693 décrit une installation de production de récipients par soufflage de préformes préalablement injectées, incorporant les caractéristiques sus-mentionnées, à savoir : un dispositif d'entraînement et de maintien des préformes sur un cheminement duquel sont disposés les moyens de conditionnement thermique ; plusieurs moules de type portefeuille disposés à la périphérie d'un carrousel de soufflage ; des moyens pour assurer le transfert des préformes des moyens de conditionnement thermique vers les moules.

Il est connu que ces installations permettent d'obtenir de fortes cadences de production: ainsi, avec du matériau tel que le PET, et les processus de conditionnement thermique connus actuellement, il est possible de produire, par étirage-soufflage, jusqu'à environ 1100 récipients par heure et par moule, la capacité globale de l'installation dépendant du nombre de moules portés par le carrousel. A titre indicatif, les plus grosses installations actuellement produites par la demanderesse portent 40 moules.

Dans les installations de ce type, le poste de conditionnement thermique comprend des supports, adaptés chacun pour recevoir et maintenir fermement, mais de façon amovible, une préforme, et agencés entre eux pour constituer un dispositif sans fin. Le dispositif sans fin peut être constitué par un carrousel ou bien encore à la façon d'une chaîne portée par au moins deux pignons d'entraînement. Dans ces dispositifs, les préformes sont maintenues par des moyens, tels qu'un mandrin avec une bague élastique, introduits dans leur ouverture. De plus, de préférence, l'agencement des supports dans le poste de conditionnement thermique est tel que les préformes peuvent y être chauffées avec l'ouverture (le col) vers le bas, pour éviter toute déformation, par convection, de cette ouverture lors du conditionnement thermique. En effet, l'ouverture de la préforme correspond déjà à celle du récipient lorsqu'il sera terminé.

De plus, de préférence encore, les installations connues sont agencées pour qu'après conditionnement thermique, les préformes soient retournées, pour se retrouver ouverture vers le haut, afin d'éviter entre autres qu'en raison de leur ramollissement elles ne se déforment sous l'effet de leur propre poids avant le soufflage des récipients. Dans ce cas, le retournement peut avoir lieu dans le dispositif de conditionnement thermique ou dans le poste de transfert.

Un inconvénient majeur de ces installations est qu'elles sont généralement bâties autour de structures mécanique (carrousel, moteurs, porte-moules, etc) et hydraulique de base dimensionnées pour permettre de réaliser des récipients qui sont de taille ou de volume important et/ou nécessitent pour leur soufflage des paramètres (pression notamment) de valeur élevée. Une personnalisation est ensuite effectuée à la demande de l'utilisateur de l'installation, qui consiste entre autres à pourvoir l'installation avec des moules ayant chacun une cavité de taille adaptée aux récipients à obtenir, et à régler les paramètres de soufflage et de conditionnement thermique en fonction des préformes utilisées et des récipients souhaités.

Il s'ensuit que si les récipients à obtenir sont de petite taille ou nécessitent des pressions de soufflage peu élevées, par exemple, l'installation peut paraître surdimensionnée par rapport à ces récipients.

Un but de l'invention est donc de remédier à ces inconvénients.

Selon l'invention, une installation de production de récipients par soufflage de préformes préalablement injectées, comportant un dispositif d'entraînement et de maintien des préformes sur un cheminement duquel sont disposés des moyens de conditionnement thermique et au moins deux moules de type portefeuille disposés à la périphérie d'un carrousel de soufflage, et des moyens pour assurer le transfert des préformes vers les moules, est caractérisée en ce qu'elle comporte les caractéristiques de la revendication 1.

L'invention est particulièrement avantageuse puisqu'elle permet d'exploiter au mieux les caractéristiques des installations.

En particulier, si une installation est calculée pour réaliser dans chaque moule, à chaque rotation du dispositif de soufflage, seulement un récipient ayant un volume maximum déterminé, l'invention permet de personnaliser l'installation pour qu'il soit réalisé dans chaque moule à chaque rotation, en raison de l'existence de plusieurs cavités par moule, plusieurs récipients de volume moindre.

Un autre avantage de l'invention est qu'elle permet d'augmenter notablement les cadences de production, puisqu'on augmente le nombre global de cavités de soufflage.

Grâce à un tel agencement, les préformes peuvent être très proches l'une de l'autre dans le poste de conditionnement thermique, de sorte que celui-ci peut être le plus compact possible, compte tenu du débit souhaité de l'installation, et les préformes peuvent être écartées avant leur introduction dans le moule, pour tenir compte de leur expansion radiale lors du soufflage.

D'autres caractéristiques et avantages de l'invention apparaîtront à la lecture de la description qui suit, faits en regard des figures annexées, sur lesquelles:
- La figure 1 est un schéma de principe d'une installation conforme à l'invention;
- la figure 2 est une vue de dessus du mode de réalisation préféré des mécanismes de changement d'espacement et de transfert des préformes dans les moules d'une part, et du mécanisme de déchargement des récipients d'autre part;
- la figure 3 est une vue selon une coupe AA de la figure 2 du mécanisme de modification d'espacement;
- la figure 4 est un schéma d'implantation préféré des éléments des figures 2 et 3 dans une installation avec un dispositif de conditionnement thermique linéaire;
- la figure 5 est un schéma d'implantation possible des éléments des figures 2 et 3 dans une installation avec un dispositif de conditionnement thermique circulaire.

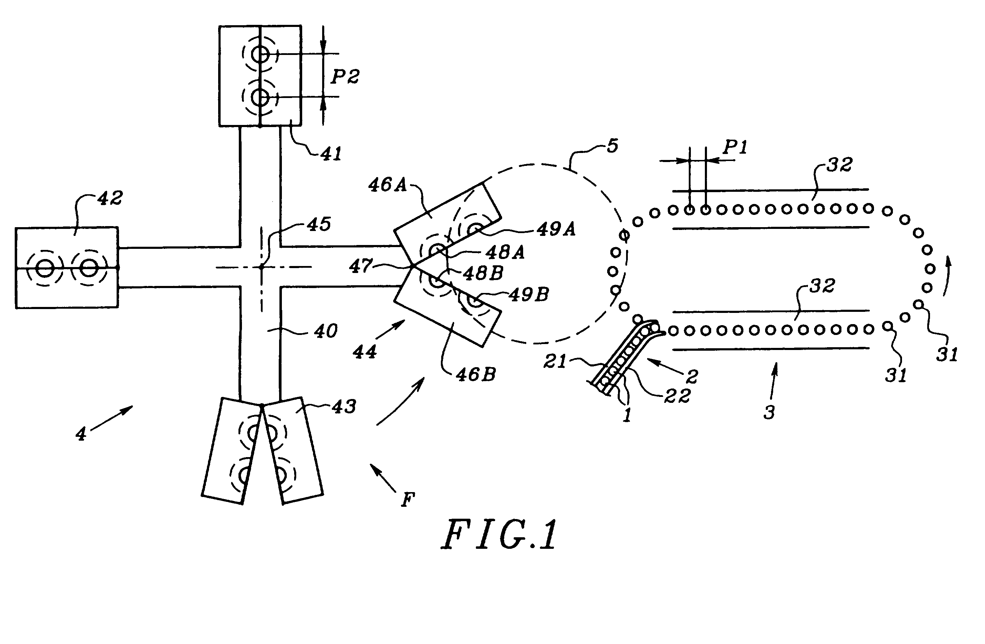

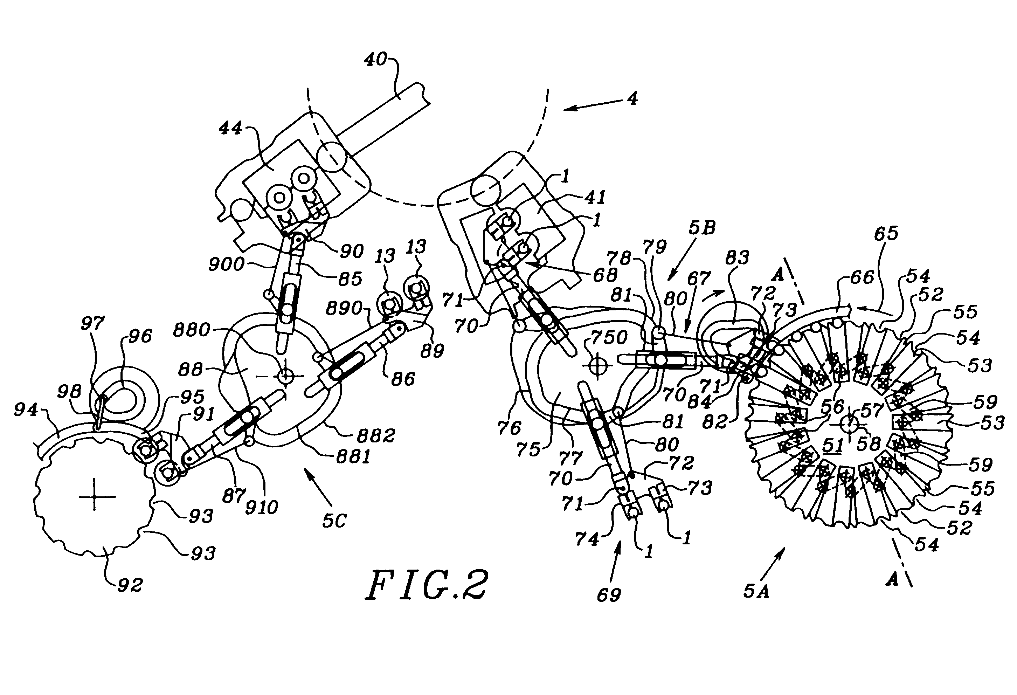

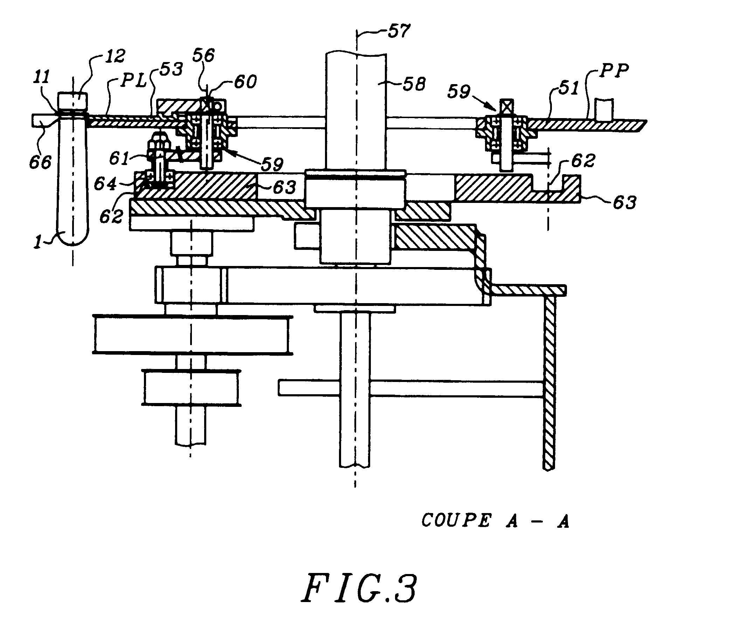

Suivant l'exemple d'exécution représenté aux figures 1 à 5, l'invention concerne une installation de fabrication de récipients, par soufflage de préformes 1 en matière plastique, celles-ci étant obtenues par exemple par injection dans une machine à injecter.

En se référant à la figure 1, les préformes ainsi fabriquées sont amenées d'un ou plusieurs conteneurs de stockage (non représentés), par un dispositif d'amenée 2 tel qu'une goulotte, à un dispositif de conditionnement thermique 3, tel qu'un four à rayonnement infrarouge, où elles sont chauffées à la température nécessaire pour le soufflage. De façon connue, le dispositif de conditionnement 3 est constitué par exemple par une chaîne sans fin de tournettes 31, régulièrement espacées d'un pas P1, et destinées à recevoir chacune une préforme, et comporte une au plusieurs zones 32, avec des moyens de chauffage infrarouge (non représentés) devant lesquels les préformes se trouvent exposées lors de la circulation de la chaîne sans fin.

De préférence, et de façon connue également, pour éviter un ramollissement de leur col, le dispositif de conditionnement thermique 3 comporte des moyens de retournement des tournettes, pour permettre que les préformes, après avoir été chargées ouverture vers le haut, soient portées chacune, ouverture vers le bas et fond vers le haut, pendant toute la durée du traitement thermique. L'introduction de chaque préforme ouverture vers le haut est justifiée par l'existence d'une collerette située sous leur ouverture, permettant de la supporter dans des glissières 21, 22 du dispositif d'amenée 2. Ensuite, avant de rencontrer une première zone 32 de chauffage, chaque préforme est rendue fermement solidaire d'une tournette, par vêtissage de son col à l'aide d'organes connus tels qu'un mandrin et une bague élastique appartenant chacun à la tournette considérée, puis retournée, pour se retrouver ouverture vers le bas.

Après avoir subi le traitement thermique désiré et avoir été remise à nouveau ouverture vers le haut, chaque préforme est séparée de la tournette qui la porte par dévêtissage, c'est-à-dire retrait du mandrin et de la bague élastique de son col, avant d'être transférée à un poste ou dispositif de soufflage 4 par l'intermédiaire d'un dispositif interface 5 qui sera détaillé plus après. Après soufflage, les récipients obtenus sont évacués par un dispositif approprié non représenté sur ce schéma de principe, et situé par exemple à l'emplacement de la flèche F.

Conformément à l'invention, le poste de soufflage 4 est constitué à partir d'un carrousel ou plateau tournant 40 portant aux moins deux moules 41, 42, 43, 44, du type portefeuille, répartis symétriquement et régulièrement autour de l'axe de rotation 45, vertical, du carrousel, et comportant chacun au moins deux cavités de soufflage.

Chaque moule 41, 42, 43, 44 est formé de deux demi-moules 46A, 46B, s'articulant pour leur ouverture et leur fermeture, à l'aide de moyens connus et non représentés, autour d'un axe 47 porté par le carrousel. A titre d'exemple, et sans que ceci soit limitatif, l'ouverture et la fermeture des moules peuvent être assurées par des moyens identiques ou équivalents à ceux décrits dans la demande de brevet français publiée sous le numéro 2 479 077 qui est incorporée ici par référence, c'est-à-dire par un mécanisme comportant un bras tourillonant dans le carrousel 40 et commandé par un galet coopérant avec une came fixe par rapport au carrousel.

Chaque demi-moule comprend autant de demi-cavités que le moule comporte de cavités. Dans l'exemple illustré où chaque moule comporte deux cavités, chaque demi-moule 46A, 46B, comprend deux demi-cavités 48A, 49A; 48B, 49B, respectivement.

De préférence, quelle que soit la forme finale du récipient à obtenir, ou impérativement lorsque la forme finale interdit un démoulage aisé (fond pétaloïde par exemple), chaque moule est associé à des moyens de fermeture du fond.

Dans le dispositif de conditionnement thermique 3, les préformes sont continuellement espacées d'un premier pas P1, le pas ou l'espacement étant défini comme étant la distance séparant l'axe longitudinal de deux préformes successives ou, ce revient au même, la distance séparant l'axe longitudinal des supports de deux préformes successives dans ce dispositif. Dans le poste de soufflage 40, deux cavités successives d'un même moule sont espacées d'un second pas P2, supérieur au premier pas P1, calculé pour tenir compte, d'une part de l'expansion radiale des préformes lors du soufflage, et d'autre part de la nécessité de laisser une épaisseur de matière suffisante entre deux cavités, pour que le moule ait une résistance mécanique correcte lors du soufflage. Comme évoqué auparavant, les préformes sont le plus proches possible l'une de l'autre dans le dispositif de conditionnement thermique, et donc l'espacement y est inférieur, pour que celui-ci ait les plus petites dimensions possibles, compte tenu du débit global souhaité pour l'installation. En conséquence, le dispositif interface 5 comporte des moyens pour assurer la modification de l'espacement et le transfert des préformes entre le dispositif de conditionnement thermique et le poste de soufflage 40.

A titre d'exemple, le premier pas P1 peut être de l'ordre de 50 millimètres et le second pas P2 peut être de l'ordre de 80 millimètres ou plus.

Les figures 2 et 3 illustrent une mise en oeuvre préférée du dispositif interface, adapté à la saisie et au transfert de préformes dans des moules à deux cavités de soufflage.

Dans cette mise en oeuvre, le dispositif interface 5 comporte au moins deux organes complémentaires: un premier organe 5A dans lequel les préformes arrivent au premier pas P1, puis sont écartées, après dévêtissage, pour passer au second pas P2, et un second organe 5B comprenant au moins un dispositif de transfert pour saisir les préformes 1 après qu'elles aient été mises au second pas P2 et les transférer dans les moules.

Le premier organe 5A est constitué par un plateau 51 (encore appelé roue, en raison de sa forme sensiblement circulaire) tournant pourvu, sur toute sa périphérie, d'une alternance d'éléments fixes de maintien 52 des préformes, tels que des échancrures en forme d'encoches, et d'organes mobiles 53 pourvus chacun d'un élément de maintien 54, tel qu'une échancrure en forme d'encoche. L'espacement entre les centres de deux éléments fixes 52 successifs est tel que l'arc de cercle reliant ces deux éléments possède une longueur double du premier pas P1. Comme le montre la figure 3, les éléments de maintien fixes 52 et mobiles 54 assurent le maintien des préformes 1 grâce à une collerette 11 située sous leur col.

Les éléments fixes sont réalisés directement à la périphérie du plateau, dans sa masse. Le plateau comporte, régulièrement répartis dans son épaisseur, des secteurs présentant des évidements radiaux 55 identiques débouchant chacun dans un intervalle entre deux éléments fixes 52 successifs, et les organes mobiles 53 sont constitués par des lames identiques, par exemple de forme sensiblement rectangulaire, disposées chacune dans un évidement. L'élément de maintien 54 des préformes associé à une lame est réalisé à une extrémité de celle-ci, et l'extrémité opposée est montée en rotation, autour d'un axe 56, sur le plateau 51. Par ailleurs, les axes de rotation 56 de l'ensemble des lames sont régulièrement répartis sur le plateau 51 et délimitent un cercle concentrique à l'axe de rotation 57 du plateau 51. Grâce à cette disposition, tout mouvement de rotation d'une lame autour de son axe entraîne une variation de l'espacement entre l'élément de maintien 54 qui y est associé et les deux éléments de maintien fixes 52 situés de chaque côté de la lame, sur le plateau 51. Comme il sera montré après, la rotation des lames est assurée par des moyens de commande liés aux lames et à une partie fixe de l'installation, de sorte que la position angulaire d'une lame par rapport au plateau, à tout moment de la rotation du plateau, dépend de la position angulaire du plateau par rapport à l'installation.

La rotation du plateau 51 autour de son axe 57, en synchronisme avec le reste de l'installation, est assurée par un arbre 58 auquel est transmis le mouvement de rotation du moteur de l'installation, non représenté, par l'intermédiaire de moyens connus en soi (courroies, pignons, ou autres) et également non représentés.

Chaque lame 53 est associée à une manivelle 59 distincte, mais identique d'une lame à l'autre, pour assurer sa rotation et donc le changement de pas. Plus précisément, la première extrémité 60 de la manivelle associée à une lame est solidaire de l'axe de rotation 56 de cette lame, et la seconde extrémité 61 est engagée dans une came 62 de guidage, solidaire du bâti de l'installation, donc fixe par rapport à l'installation. Dans le mode de réalisation illustré par les figures 2 et 3, la came 62 est constituée par une rainure réalisée dans l'épaisseur d'un plateau 63 fixe disposé autour de l'arbre 58 d'entraînement du plateau tournant 51, au-dessous ce dernier, et dans un plan parallèle à ce dernier. La rainure forme une boude fermée autour de l'arbre, et présente des variations dans son rayon de courbure, de sorte que lorsque le plateau 51 tournant est entraîné en rotation, la seconde extrémité de chaque manivelle suit les variations de la courbure de la came ménagée dans le plateau fixe. Ainsi, chaque fois que la seconde extrémité d'une manivelle rencontre un changement de courbure de la came, il en résulte une rotation de sa première extrémité 60, donc le mouvement de la lame associée et, en conséquence, une variation de l'espacement entre l'élément 54 porté par la lame 53 considérée et les éléments fixes 52 de maintien situés de part et d'autre de cette lame. Or, puisque toutes les lames sont fixées et articulées de la même manière sur le plateau tournant (axes de rotation portés par un cercle concentrique à l'axe du plateau et manivelles identiques), elles ont toutes une cinématique identique, mais déphasée d'une lame à l'autre.

De préférence, comme illustré par la figure 3, qui est une vue en coupe AA du plateau 51 de la figure 2, la seconde extrémité 61 de chaque manivelle est guidée dans la came par l'intermédiaire d'un galet 64, monte autour de cette extrémité.

Comme le montre la figure 3, l'épaisseur des lames 53 ou, ce qui revient au même, la profondeur des évidements 55, est telle que les encoches fixes et les encoches mobiles portent les préformes à la même hauteur, pour qu'elles puissent être introduites à la même hauteur dans les moules.

Ainsi, dans l'exemple illustré, le plan supérieur PL des lames 53 est aligné avec le plan supérieur PP des secteurs non évidés du plateau, pour que les préformes 1 puissent être maintenues à la même hauteur grâce à leur collerette 11, située sous leur col 12, tant dans les organes de maintien fixes 52 que dans les organes de maintien mobiles 54.

Puisque le changement de pas ne peut avoir lieu qu'après dévêtissage, on comprend bien en observant les figures 2 et 3 que les éléments de maintien fixes 52 et mobiles 54 de la roue 51, constitués par les échancrures en forme d'encoches ne suffisent pas à maintenir les préformes après dévêtissage. C'est pourquoi, leur action est complétée par un élément de maintien complémentaire 66, constitué de préférence par une portion de couronne circulaire, agissant après le dévêtissage et dans la zone où le changement de pas survient, jusqu'à la saisie des préformes par le second organe 5B. L'espacement entre cette portion de couronne et les encoches est tel que les préformes peuvent glisser le long de cet élément lorsque la roue 51 tourne, tout en étant maintenues chacune par leur col entre une encoche fixe ou mobile, selon la position où elles se trouvent, et cet élément 66.

Comme indiqué auparavant, le dispositif interface 5 comporte, en complément de l'organe de changement de pas 5A, au moins un second organe 5B pour y saisir les préformes 1 au second pas P2 et les transférer dans les moules. En conséquence, si la roue 51 de l'organe 5A de changement de pas tourne dans le sens illustré par la flèche 65 sur la figure 2, les manivelles 59 et la came 62 sont agencées pour que les éléments de maintien fixes 52 et mobiles 54 puissent faire passer les préformes 1 du premier pas P1, dont elles sont espacées en amont de la zone où le second organe 5B saisit les préformes 1, au second pas P2 dans cette zone.

Comme illustré par la figure 2, le second organe 5B comprend au moins un élément de transfert 67, 68, 69. De préférence, en raison des cadences élevées de l'installation plusieurs éléments identiques sont présents. Ainsi, dans l'exemple illustré par cette figure 2, trois éléments sont présents.

Chaque élément comporte un bras 70 à une première extrémité duquel est articulé en rotation, grâce à un pivot 71, un support 72 portant autant de paires de pinces 73, 74 que chaque moule du carrousel 4 comporte de cavités. Ainsi, dans le mode de réalisation illustré par la figure 2, chaque bras supporte deux paires de pinces, dont les centres sont écartés du second pas P2.

De préférence, chaque paire de pinces est constituée de la même manière que celles se trouvant dans les installations connues comprenant un seul moule par cavité, c'est-à-dire qu'il peut s'agir de paires de pinces à ouverture ou fermeture commandée à l'aide d'un système à cames, galets et ressorts ou plus simplement, comme dans le mode de réalisation illustré par la figure 2, de paires de pinces à ressorts s'ouvrant grâce à la force exercée par le col des préformes, au moment où les préformes y sont introduites ou extraites, et se refermant sous l'action des ressorts qui les lient à leur support. Ces deux types de paires de pinces sont bien connus et ne seront pas décrits plus en détail.

La seconde extrémité du bras 70 est montée, en rotation et en translation sur un support 75 tournant lui-même autour d'un axe 750 en synchronisme avec le reste de l'installation. Les mouvements de rotation et de translation de la seconde extrémité du bras sont assurés, de façon connue, par des cames fixes 76, 77 par rapport à l'installation, entraînant des galets liés au bras et guidés par ces cames.

Cet agencement est réalisé notamment pour que, lors de la saisie des préformes, le mouvement de la première extrémité du bras soit asservi à la rotation du plateau, permettant ainsi que la première extrémité et donc les pinces accompagnent le plateau sur une distance suffisante pour assurer une saisie parfaite.

Cet agencement est encore réalisé pour qu'un second asservissement entre le mouvement de la première extrémité du bras et un porte moule ait lieu au moment du transfert des préformes dans les cavités des moules, jusqu'à fermeture complète du moule, assurant un positionnement parfait des préformes dans les cavités.

De plus, la variation de longueur des bras, permise par les mouvements de rotation et de translation, permet d'optimiser l'encombrement de ces bras lors de la rotation entre le moment de la saisie et celui du transfert.

Cependant, étant donné que chaque bras porte au moins deux pinces, on conçoit que le seul asservissement du mouvement de la première extrémité du bras 70 n'est pas suffisant pour assurer la saisie sur la roue 51 de changement de pas ou le transfert correct des préformes dans les moules. C'est pourquoi, les mouvements de rotation et de translation du bras sont accompagnés d'une rotation du support 72 des paires de pinces par rapport à ce bras, permettant un positionnement correct des pinces et un accompagnement du mouvement tant du plateau lors de la saisie des préformes, que des moules pendant le transfert et leur fermeture.

Cette rotation du support 72 des pinces est obtenue grâce à une troisième came 78, fixe par rapport au support 75 tournant, qui entraîne un autre galet 79, lié à une première extrémité d'une première biellette 80, dont la seconde extrémité est reliée au support 72 des pinces, et par une seconde biellette 81 reliant le galet 79 à la seconde extrémité du bras 70.

Sur la figure 2, l'un des trois bras de transfert est représenté alors qu'il se trouve dans un moule 41.

De préférence, l'extrémité de l'élément de maintien 66, complémentaire des encoches fixes ou mobiles est prolongée par une partie mobile 82 s'éclipsant après que les préformes aient été saisies par les pinces, pour permettre un dégagement plus rapide des préformes, et évitant d'avoir à prolonger le mouvement d'accompagnement du plateau jusqu'à ce que la dernière préforme saisie soit complètement dégagée de cet élément de maintien. Dans le mode de réalisation illustré, cette partie mobile 82 est une portion de couronne, montée en rotation sur l'élément de maintien complémentaire 66, également en forme de couronne. Lorsque les pinces reliées à un bras n'ont pas encore saisi les préformes, la partie mobile 82 prolonge l'élément complémentaire. Dès que la saisie est réalisée, la partie mobile 82 s'écarte.

Une came 83 tournant en synchronisme avec l'installation entraîne une biellette 84 reliée à la partie mobile 82. Le profil de la came est tel que la partie mobile 82 reste en position de maintien des préformes tant que la saisie n'est pas assurée, puis s'écarte après la saisie, et revient en position rapprochée jusqu'à la saisie des préformes suivantes.

Le déchargement des récipients 13, après soufflage dans les moules s'effectue à l'aide d'un dispositif 5C comprenant un ou plusieurs éléments de transfert de structure similaire à ceux 67, 68, 69 servant au chargement des préformes. Les éléments comportent un ou plusieurs bras 85, 86, 87 montés chacun en rotation et en translation autour d'un support unique 88 tournant lui-même autour d'un axe 880, et à chaque bras est articulé un support 89, 90, 91, avec autant de moyens de préhension, tels que des paires de pinces que chaque moule comporte de cavités. De façon connue, les pinces viennent saisir les récipients 13 par leur col.

Un mécanisme à cames 881, 882, galets et biellettes 890, 900, 910 permet que le mouvement des pinces soit asservi à la rotation d'un moule pendant un cheminement nécessaire à une bonne saisie des récipients, et que les récipients soient déchargés, en étant asservis à son mouvement, sur une roue 92 à encoches 93 et un support 94, en forme de portion de couronne, complémentaire de la roue à encoches.

De préférence, un organe 95, en forme de portion de couronne, prolonge le support complémentaire 94. Cet organe est relié à un mécanisme à came 96, galet 97 et biellette 98, dont la came est entraînée en synchronisme avec le reste de l'installation. L'organe 95 se dégage sous l'action du mécanisme à came 96, galet 97 et biellette 98 au moment où les pinces arrivent sur la roue à encoches et se rapproche lorsqu'elles sont bien engagées, pour faciliter la prise des récipients par la roue à encoches. Les récipients entraînés par leur col entre la roue à encoches et l'organe complémentaire 93 sont alors extraits en force des pinces alors- que l'élément de transfert continue sa rotation dans une direction croisée.

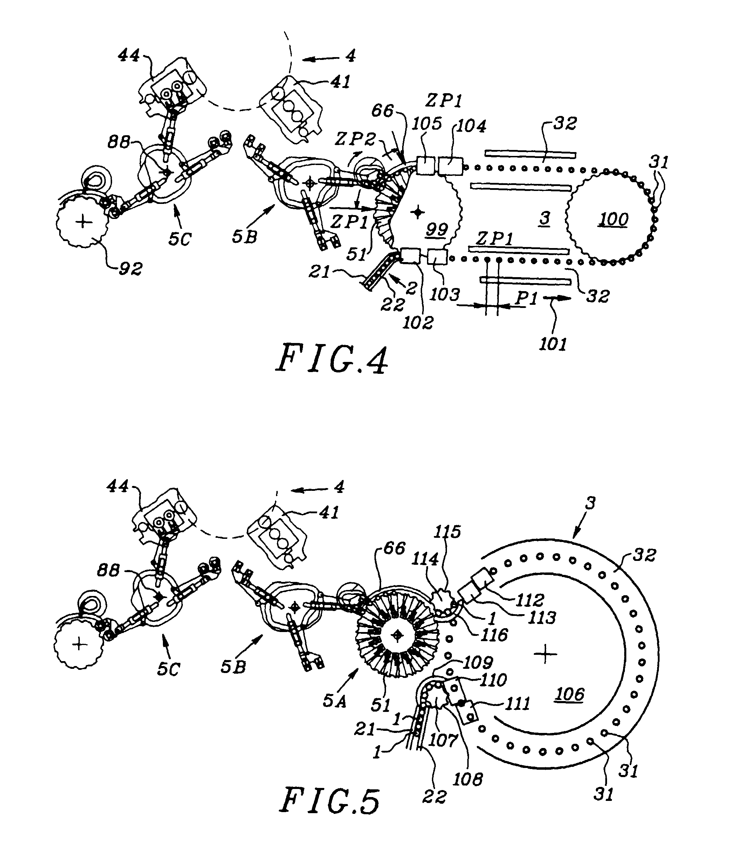

Sur la figure 4 apparait une implantation préférée des éléments des figures 2 et 3, lorsque le dispositif de conditionnement thermique 3 est du type linéaire, c'est-à-dire dans lequel la chaîne sans fin de tournettes 31, de structure connue, possède au moins deux secteurs linéaires en regard desquels se trouvent les zones 32 de chauffage et est tendue entre deux plateaux ou roues, un premier 99 servant à l'entraînement de cette chaîne en synchronisme avec le reste de l'installation, et un second 100 servant à la tension et au renvoi de la chaîne.

Dans ce cas, le dispositif 5A de changement de pas, constitué par la roue 51 à encoches à pas variable de la figure 2, est disposé coaxialement au premier plateau 99 d'entraînement de la chaîne de tournettes 31, sous celui-ci, et est entraîné avec lui, comme l'est une roue à encoches fixes dans les installations connues de l'art antérieur. Comme expliqué après, cet agencement permet d'utiliser cette roue 51 à encoches à pas variable pour le vêtissage et le dévêtissage.

Sur cette figure 4, le premier plateau 99 est représenté en vue éclatée pour que la roue 51 à encoches à pas variable soit visible.

En supposant que le dispositif de conditionnement thermique 3 soit entraîné dans le sens illustré par la flèche 101, le dispositif d'amenée 2 dirige les préformes 1, ouverture vers le haut, vers un point d'une zone ZP1 de l'installation où le pas entre les encoches fixes 52 et mobiles 54 est le premier pas P1, c'est-à-dire celui du dispositif de conditionnement thermique 3, de façon que chaque encoche, et donc chaque préforme arrivant sur la roue 51 dans cette zone ZP1, soit en regard des moyens de vêtissage, par exemple constitués par un mandrin et une bague élastique, d'une tournette.

Chaque préforme se présentant dans le dispositif d'amenée est alors happée par une encoche fixe ou mobile, puis entraînée vers une zone 102 de vêtissage avec des moyens connus, par exemple un dispositif, non représenté, à came faisant descendre dans le col des préformes le mandrin et la bague élastique associés à chaque tournette successive.

Ensuite, les préformes passent dans une zone 103 où elles subissent un retournement, pour se trouver fond vers le haut dans les zones de chauffage 32.

Après conditionnement thermique, avant d'arriver à nouveau sur la roue 51 à encoches fixes 52 et mobiles 54, les tournettes sont à nouveau retournées, par un dispositif 104 connu également, pour que les préformes se retrouvent fond vers le bas, avant de revenir au contact de la roue à encoches 51.

Ensuite, après s'être retrouvée - toujours dans la zone ZP1 où le pas entre les encoches est le premier pas P1 - entre une encoche et l'élément de maintien complémentaire 66, constitué sur la figure 2 par une portion de couronne circulaire, chaque préforme subit, l'une après l'autre, dans une zone 105, un dévêtissage de son col. Chaque préforme se retrouve alors portée uniquement par son col entre une encoche et l'élément de maintien complémentaire 66.

Le préformes pénètrent alors dans une zone ZP2 où elles subissent le changement de pas avant d'être saisies par le second organe 5B comprenant au moins un dispositif de transfert pour saisir les préformes et les conduire vers les moules.

De ce qui précède, il résulte qu'avec ce mode de réalisation, la came 62 guidant les manivelles 59 doit être profilée pour que les éléments de maintien, tels que des encoches fixes ou mobiles soient au premier pas P1 au moins aux moments du vêtissage et du dévêtissage.

De plus cette came doit être profilée de façon que les éléments de maintien soient au second pas P2 au moins lorsque les pinces 73, 74 du dispositif de transfert des préformes vers les moules sont en contact avec les préformes.

Par contre, il n'est pas nécessaire mais il est seulement préférable que la came soit profilée pour que l'amenée des préformes se fasse dans un zone où les éléments de maintien sont au premier pas P1: en effet, il est tout à fait envisageable que les préformes soient amenées dans une zone où le pas est le second P2, le retour au premier pas P1 s'effectuant entre le moment où les préformes sont happées par une encoche et celui du vêtissage.

Dans une variante, non représentée, le dispositif d'amenée 2 des préformes dirige les préformes, non pas directement sur la roue 51 de changement de pas, mais sur une roue intermédiaire de chargement.

La figure 5 illustre une implantation possible des éléments des figures 2 et 3 sur une installation dans laquelle le dispositif de conditionnement thermique est un carrousel 106.

Les moyens de chargement, vêtissage et conditionnement sont connus. Ainsi, le dispositif d'amenée 2 dirige les préformes 1 sur une roue intermédiaire 107 à encoches 108 et sur un support 109 en forme de portion de couronne. Chaque préforme, portée par sa collerette 11 sur une encoche 108 et sur le support 109 est dirigée vers une zone 110 de vêtissage, puis une zone de retournement 111, précédant les zones 32 de conditionnement thermique.

Après conditionnement thermique, les préformes aboutissent dans une zone 112 de retournement, puis elles sont dévêties en 113 juste avant d'être happées entre les encoches 114 d'une autre roue intermédiaire 115 et un support 116 en forme de portion de couronne.

La roue 51 à encoches fixes 52 et mobiles 54 de même que l'élément de maintien complémentaire 66, constitué par une portion de couronne circulaire, se trouvent juste en aval de la roue intermédiaire 115 et du support 116, de façon que les préformes, guidées entre les encoches 114 de cette roue 115 et le support 116, puissent être transférées de cette roue et de ce support entre les encoches fixes 52 et mobiles 54 et l'élément de maintien complémentaire 66, afin de subir le changement de pas.

En aval de la roue 51 à encoches fixes et mobiles se trouve le second organe 5B pour saisir les préformes 1 après qu'elles aient été mises au second pas P2 et les transférer dans les moules.

Bien entendu, l'invention n'est nullement limitée aux modes de réalisation décrits mais elle englobe leurs équivalents et toutes les variantes ou adaptations qui seraient à la portée de l'homme du métier, dans le cadre des revendications.

## Revendications

1. Installation de production de récipients (13) par soufflage de préformes (1) préalablement injectées, comportant un dispositif (3, 31) d'entraînement et de maintien des préformes sur un cheminement le long duquel sont disposés des moyens de conditionnement thermique (32), et au moins deux moules (41, 42, 43, 44) de type portefeuille disposés à la périphérie d'un carrousel de soufflage (4), et des moyens (5B) de transfert pour assurer le transfert des préformes vers les moules, caractérisée en ce que les moules comprennent chacun au moins deux cavités (48A, 48B ; 49A, 49B) de moulage dont les axes longitudinaux sont espacés d'un pas (P2), et en ce que, dans le dispositif d'entraînement (3, 31), l'espacement (P1) entre les axes longitudinaux de deux préformes successives est inférieur à celui (P2) entre les axes longitudinaux de deux cavités adjacentes d'un même moule, et elle comporte un dispositif interface (5) constitué au moins par des moyens (5A) pour assurer la modification de l'espacement des préformes entre le dispositif d'entraînement et les moules, afin de les faire passer du premier pas (P1) au second pas (P2), et par lesdits moyens (5B) de transfert, ces derniers comprenant au moins un élément de transfert (67,68,69) comportant autant de moyens de préhension (73,74) de préformes qu'un moule comporte de cavités, de façon à ce qu'un élément de transfert saisisse et amène simultanément dans un moule autant de préformes que le moule comporte de cavités.

2. Installation selon la revendication 1, caractérisée en ce qu'elle comporte, outre les moyens pour transférer les préformes vers les moules, des moyens pour décharger chaque préforme du dispositif d'entraînement.

3. Installation selon la revendication 2, caractérisée en ce que les moyens pour décharger chaque préforme du dispositif d'entraînement (3) sont constitués par ceux (5A) agencés pour assurer la modification de l'espacement.

4. Installation selon la revendication 1, caractérisée en ce que les moyens (5B) pour assurer le transfert des préformes vers les moules sont agencés pour agir après les moyens (5A) de modification de l'espacement.

5. Installation selon l'une des revendications 1 à 4, caractérisée en ce que les moyens (5A) pour décharger les préformes et assurer la modification de l'espacement sont constitués par un plateau tournant (51) comportant à sa périphérie une alternance d'éléments fixes (52) et d'éléments mobiles (54) de maintien des préformes.

6. Installation selon la revendication 5, caractérisée en ce que les éléments fixes (52) et les éléments mobiles (54) sont des encoches, et en ce qu'elle comporte un élément de maintien complémentaire (66), constitué par une portion de couronne circulaire permettant que les préformes (1) soient portées, entre les encoches et cet élément complémentaire, par leur collerette (11), entre le moment du dévêtissage et le moment où les préformes sont saisies par les premiers moyens de transfert (5B), après la modification de l'espacement.

7. Installation selon la revendication 6, caractérisée en ce que le plateau tournant (51) est de forme circulaire, et en ce que les encoches fixes (52) sont régulièrement réparties et directement réalisées dans la masse du plateau, à sa périphérie.

8. Installation selon la revendication 6, caractérisée en ce que les encoches mobiles (54) sont réalisées dans des lames (53) identiques montées en rotation sur le plateau, et en ce qu'elle comporte des moyens (59, 62, 63) agencés pour qu'à tout moment la position d'une lame par rapport aux encoches fixes situées de part et d'autre de cette lame soit fonction de la position du plateau tournant (51) par rapport à l'installation.

9. Installation selon la revendication 8, caractérisée en ce que le plateau tournant (51) comporte, régulièrement répartis dans son épaisseur, des secteurs présentant des évidements radiaux (55) identiques ménagés chacun dans les intervalles entre deux encoches fixes (52) successives, en ce que les lames sont positionnées dans ces évidements radiaux, et en ce que la profondeur des évidements (55) est telle que les encoches fixes et les encoches mobiles portent les préformes à la même hauteur.

10. Installation selon la revendication 9, caractérisée en ce que les axes de rotation (56) de l'ensemble des lames sont régulièrement répartis sur le plateau tournant (51) et délimitent un cercle concentrique à l'axe de rotation (57) de ce plateau (51).

11. Installation selon l'une des revendications 8 à 10, caractérisée en ce que chaque lame (53) est associée à une manivelle (59) respective, pour assurer sa rotation et donc le changement de pas, une première extrémité (60) de la manivelle associée à une lame étant solidaire de l'axe de rotation (56) de cette lame, et une seconde extrémité (61) étant engagée dans une came (62) de guidage, solidaire du bâti de l'installation.

12. Installation selon la revendication 11, caractérisée en ce que la came (62) est constituée par une rainure, formant une boucle fermée, réalisée dans l'épaisseur d'un plateau (63) fixe disposé autour de l'arbre (58) d'entraînement du plateau tournant (51) dans un plan parallèle à ce dernier, et présentant des variations dans son rayon de courbure, de sorte que lorsque le plateau (51) tournant est entraîné en rotation, la seconde extrémité (61) de chaque manivelle (59) suit les variations de la courbure de la came ménagée dans le plateau fixe, entraînant la rotation de la came associée,donc une variation de l'espacement.

13. Installation selon la revendication 1, caractérisée en ce que les moyens (5B) de transfert sont constitués par au moins un premier bras (70) dont une première extrémité porte autant de moyens de préhension de préformes, tels que des paires de pinces (73,74), qu'un moule comporte de cavités, l'espacement entre les centres de deux moyens de préhension successifs étant identique à celui (P2) entre les axes longitudinaux de deux cavités successives d'un même moule.

14. Installation selon l'une des revendications 1 à 13, caractérisée en ce qu'elle comporte des seconds moyens de transfert (5C) pour décharger les récipients (13) des moules.

15. Installation selon la revendication 14, caractérisée en ce que les seconds moyens de transfert (5C) sont constitués par au moins un second bras (85, 86, 87) dont une première extrémité porte autant de moyens de préhension de récipients (13), tels que des paires de pinces, qu'un moule comporte de cavités, l'espacement entre les centres de deux moyens de préhension successifs étant identique à celui (P2) entre les axes longitudinaux de deux cavités successives d'un même moule.

16. Installation selon l'une des revendications 13 ou 15, caractérisée en ce que les moyens de préhension (73, 74) des préformes sont portés par un premier support (72) monté en rotation sur la première extrémité du premier bras (70) et/ou les moyens de préhension des récipients (13) sont portés par un second support (89, 90, 91) monté en rotation sur la première extrémité du second bras (85, 86, 87).

17. Installation selon la revendication 16, caractérisée en ce que la seconde extrémité du premier bras (70) est montée sur un troisième support (75) tournant autour d'un axe (750) parallèle à celui du carrousel (4) portant les moules et/ou la première extrémité du second bras est montée sur un quatrième support (88) tournant autour d'un axe (880) parallèle à celui du carrousel portant les moules, et en ce qu'elle comporte des moyens pour que le premier (70) et/ou le second bras (85, 86, 87) effectuent des mouvements de rotation et de translation par rapport à leur support tournant respectif.

18. Installation selon la revendication 17, caractérisée en ce que les mouvements de rotation du premier support (72) des moyens de préhension des préformes (1) et/ou du second support (89, 90, 91) des moyens de préhension des récipients (13), à la première extrémité du premier et/ou du second bras, sont commandés par des moyens (79, 80 ; 890, 900, 910) solidaires du support tournant (75, 88) respectif.

19. Installation selon l'une des revendications 17 ou 18, caractérisée en ce que les moyens pour que le premier et/ou le second bras effectuent des mouvements de rotation et de translation par rapport à leur support tournant respectif et/ou les moyens pour que le support de chaque moyen de préhension effectue des mouvements de rotation par rapport à son bras respectif sont constitués par des cames (76, 77, 881, 882)) portées par le support tournant respectif et agissant sur des organes complémentaires, tels que des galets et des biellettes (80, 890, 900, 910), solidaires du bras respectif.

20. Installation selon l'une des revendications 5 à 19, caractérisée en ce qu'elle comporte un dispositif de conditionnement thermique linéaire, avec une chaîne sans fin de tournettes (31), tendue entre deux roues (99, 100), dans laquelle deux tournettes successives sont espacées d'un premier pas (P1), et en ce que le dispositif de modification de l'espacement constitué par le plateau tournant (51) comportant à sa périphérie une alternance d'éléments fixes (52) et d'éléments mobiles (54) de maintien des préformes est disposé sous l'une de ces roues, coaxialement avec celle-ci, et est entraîné avec elle, et est agencé de façon à pouvoir être utilisé pour supporter les préformes pendant la phase de vêtissage (102) et/ou supporter les préformes entre la phase de dévêtissage (105) et leur saisie par les premiers moyens de transfert.

21. Installation selon la revendication 20, caractérisée en ce que les moyens de modification du pas sont agencés pour que les éléments fixes et les éléments mobiles de maintien des préformes soient espacés du premier pas (P1) au moins dans les zones de vêtissage (102) et/ou de dévêtissage (105).

22. Installation selon l'une des revendications 5 à 19, caractérisée en ce qu'elle comporte un dispositif de conditionnement thermique circulaire, avec une chaîne sans fin de tournettes, portée par un carrousel (106), dans laquelle deux tournettes successives sont espacées d'un premier pas (P1), et en ce que le dispositif de modification de l'espacement constitué par le plateau tournant comportant à sa périphérie une alternance d'éléments fixes et d'éléments mobiles de maintien des préformes est disposé à la périphérie du carrousel de façon à happer et supporter les préformes après leur dévêtissage (113), jusqu'à leur saisie par le second organe (5B).

## Claims

1. Installation for the production of containers (13) by blow moulding previously injected preforms (1), including a device (3, 31) for driving and holding the preforms, on a path along which there are disposed heat-treating means (32), and at least two moulds (41, 42) of the folding type, disposed on the periphery of a blow moulding carousel (4), and transfer means (5B) for transferring the preforms to the moulds, characterised in that the moulds each comprise at least two moulding cavities (48A, 48B; 49A, 49B), the longitudinal axes of which are spaced by a pitch (P2), and in that, in the driving device (3, 31), the spacing (P1) between the longitudinal axes of two successive preforms is less than that (P2) between the longitudinal axes of two adjacent cavities of the same mould, and it includes an interface device (5) consisting at least of means (5A) to ensure modification of the spacing of the preforms between the driving device and the moulds, so as to change them from the first pitch (P1) to the second pitch (P2), and by the said transfer means (5B), the latter comprising at least one transfer element (67, 68, 69) including the same number of preform-gripping means (73, 74) as there are cavities in a mould, so that one transfer element grasps and simultaneously brings into a mould the same number of preforms as there are cavities in the mould.

2. Installation according to Claim 1, characterised in that it includes, as well as the means for transferring the preforms to the moulds, means for discharging each preform from the driving device.

3. Installation according to Claim 2, characterised in that the means for discharging each preform from the driving device (3) consist of those (5A) arranged to ensure modification of the spacing.

4. Installation according to Claim 1, characterised in that the means (5B) for transferring the preforms are arranged to act after the means (5A) for modifying the spacing.

5. Installation according to one of Claims 1 to 4, characterised in that the means (5A) for discharging the preforms and ensuring the modification of the spacing consist of a revolving plate (51) including at its periphery an alternate arrangement of stationary elements (52) and movable elements (54) for holding the preforms.

6. Installation according to Claim 5, characterised in that the stationary elements (52) and the movable elements (54) are notches, and in that it includes a complementary holding element (66) consisting of a circular-crown portion permitting the preforms (1) to be carried, between the notches and this complementary element, by their flange (11), between the time of the dismounting and the time when the preforms are grasped by the first transfer means (5B), after the modification of the spacing.

7. Installation according to Claim 6, characterised in that the revolving plate (51) is of circular shape, and in that the stationary notches (52) are regularly distributed and located directly in the body of the plate, at its periphery.

8. Installation according to Claim 6, characterised in that the movable notches (54) are produced in identical strips (53) mounted rotatably on the plate, and in that it includes means (59, 62, 63) arranged so that at any moment the position of a strip in relation to the stationary notches situated on both sides of the strip is a function of the position of the revolving plate (51) in relation to the installation.

9. Installation according to Claim 8, characterised in that the revolving plate (51) includes, regularly distributed in its thickness, sectors having identical radial recesses (55) each formed in the intervals between two successive stationary notches (52), in that the strips are positioned in these radial recesses, and in that the depth of the recesses (55) is such that the stationary notches and the movable notches carry the preforms at the same height.

10. Installation according to Claim 9, characterised in that the axes of rotation (56) of the set of strips are regularly distributed over the revolving plate (51) and delimit a circle concentric to the axis of rotation (57) of this plate (51).

11. Installation according to one of Claims 8 to 10, characterised in that each strip (53) is associated with a respective crank (59) to ensure its rotation and thus the change of pitch, a first end (60) of the crank associated with a strip being united with the axis of rotation (56) of this strip, and a second end (61) being engaged in a guiding cam (62) united with the frame of the installation.

12. Installation according to Claim 11, characterised in that the cam (62) consists of a groove, forming a closed loop, located in the thickness of a stationary plate (63) disposed around the shaft (58) for driving the revolving plate (51) in a plane parallel to the latter, and having variations in its radius of curvature, so that when the revolving plate (51) is driven in rotation, the second end (61) of each crank (59) follows the variations in curvature of the cam formed in the stationary plate, leading to the rotation of the associated cam, and thus a variation of the spacing.

13. Installation according to Claim 1, characterised in that the transfer means (5B) consist of at least one first arm (70), a first end of which carries the same number of means for gripping the preforms, such as pairs of tongs (73, 74), as there are cavities in a mould, the spacing between the centres of two successive gripping means being identical to that (P2) between the longitudinal axes of two successive cavities of the same mould.

14. Installation according to one of Claims 1 to 13, characterised in that it includes second transfer means (5C) for discharging the containers (13) from the moulds.

15. Installation according to Claim 14, characterised in that the second transfer means (5C) consist of at least one second arm (85, 86, 87), a first end of which carries the same number of means for gripping the containers (13), such as pairs of tongs, as there are cavities in a mould, the spacing between the centres of two successive gripping means being identical to that (P2) between the longitudinal axes of two successive cavities of the same mould.

16. Installation according to one of Claims 13 or 15, characterised in that the means (73, 74) for gripping the preforms are carried by a first support (72) mounted rotatably on the first end of the first arm (70) and/or the means for gripping the containers (13) are carried by a second support (89, 90, 91) mounted rotatably on the first end of the second arm (85, 86, 87).

17. Installation according to Claim 16, characterised in that the second end of the first arm (70) is mounted on a third support (75) revolving about an axis (750) parallel to that of the carousel (4) carrying the moulds and/or the first end of the second arm is mounted on a fourth support (88) revolving about an axis (880) parallel to that of the carousel carrying the moulds, and in that it includes means so that the first arm (70) and/or the second arm (85, 86, 87) perform rotational and translational movements in relation to their respective revolving support.

18. Installation according to Claim 17, characterised in that the rotational movements of the first support (72) of the means for gripping the preforms (1) and/or of the second support (89, 90, 91) of the means for gripping the containers (13), at the first end of the first and/or of the second arm, are controlled by means (79, 80; 890, 900, 910) united with the respective revolving support (75, 88).

19. Installation according to one of Claims 17 or 18, characterised in that the means so that the first and/or the second arm perform rotational and translational movements in relation to their respective revolving support and/or the means so that the support of each gripping means performs rotational movements in relation to its respective arm consist of cams (76, 77, 881, 882)) carried by the respective revolving support and acting on complementary members, such as rollers and connecting rods (80, 890, 900, 910), united with the respective arm.

20. Installation according to one of Claims 5 to 19, characterised in that it includes a linear heat-treating device, with an endless chain of revolving holders (31), tensioned between two wheels (99, 100), in which two successive revolving holders are spaced by a first pitch (P1), and in that the device for modifying the spacing consisting of the revolving plate (51) including at its periphery an alternate arrangement of stationary elements (52) and movable elements (54) for holding the preforms is disposed under one of these wheels, coaxially therewith, and is driven with it, and is arranged so as to be able to be used to support the preforms during the mounting phase (102) and/or to support the preforms between the dismounting phase (105) and their grasping by the first transfer means.

21. Installation according to Claim 20, characterised in that the means for modifying the pitch are arranged so that the stationary elements and the movable elements for holding the preforms are spaced by the first pitch (P1) at least in the mounting zones (102) and/or the dismounting zones (105).

22. Installation according to one of Claims 5 to 19, characterised in that it includes a circular heat-treating device, with an endless chain of revolving holders, carried by a carousel (106), in which two successive revolving holders are spaced by a first pitch (P1), and in that the device for modifying the spacing consisting of the revolving plate including at its periphery an alternate arrangement of stationary elements and movable elements for holding the preforms is disposed at the periphery of the carousel so as to catch and support the preforms after their dismounting (113), until they are grasped by the second member (5B).

## Patentansprüche

1. Vorrichtung zur Herstellung von Behältern (13) durch Hohlkörperblasen zuvor spritzgegossener Vorformlinge (1), welche eine Einrichtung (3, 31) für den Transport und das Festhalten der Vorformlinge auf einer Strecke, entlang derer Mittel (32) zur Wärmebehandlung angeordnet sind, mindestens zwei aufklappbare Werkzeuge (41, 42, 43, 44), die auf dem Umfang eines Hohlkörperblaskarussells (4) angeordnet sind, und Übergabemittel (5B) für die Übergabe der Vorformlinge auf die Werkzeuge umfaßt, **dadurch gekennzeichnet, daß** die Werkzeuge jeweils mindestens zwei Formhohlräume (48A, 48B; 49A, 49B) enthalten, deren Längsachsen den Abstand (P2) haben, **und daß** in der Transporteinrichtung (3, 31) der Abstand (P1) zwischen den Längsachsen zweier aufeinanderfolgender Vorformlinge kleiner als der (P2) zwischen den Längsachsen der beiden einander benachbarten Hohlräume ein und desselben Werkzeugs ist und sie eine Zwischeneinrichtung (5) umfaßt, die mindestens aus Mitteln (5A) zur Modifizierung des Abstands der Vorformlinge zwischen der Transporteinrichtung und den Werkzeugen, um sie von dem ersten Abstand (P1) zu dem zweiten Abstand (P2) übergehen zu lassen, und aus den Übergabemitteln (5B) besteht, wobei diese mindestens ein Übergabeelement (67, 68, 69) umfassen, das so viele Greifmittel (73, 74) für die Vorformlinge wie ein Werkzeug Hohlräume hat, enthält, so daß ein Übergabeelement so viele Vorformlinge gleichzeitig ergreift und zu einem Werkzeug bringt, wie das Werkzeug Hohlräume besitzt.

2. Vorrichtung nach Anspruch 1, **dadurch gekennzeichnet, daß** sie, außer den Mitteln für die Übergabe der Vorformlinge auf die Werkzeuge, Mittel zur Entnahme der Vorformlinge aus der Transporteinrichtung umfaßt.

3. Vorrichtung nach Anspruch 2, **dadurch gekennzeichnet, daß** die Mittel zur Entnahme der Vorformlinge aus der Transporteinrichtung (3) aus denjenigen (5A) bestehen, die zur Modifizierung des Abstands betätigt werden.

4. Vorrichtung nach Anspruch 1, **dadurch gekennzeichnet, daß** die Mittel (5B) für die Übergabe der Vorformlinge auf die Werkzeuge angetrieben werden, um nach den Mitteln (5A) zur Modifizierung des Abstands zu wirken.

5. Vorrichtung nach einem der Ansprüche 1 bis 4, **dadurch gekennzeichnet, daß** die Mittel (5A) zur Entnahme der Vorformlinge und zur Sicherstellung der Modifizierung des Abstands aus einem Drehteller (51) bestehen, der auf dem Umfang abwechselnd feststehende (52) und bewegliche Elemente (54) für das Festhalten der Vorformlinge enthält.

6. Vorrichtung nach Anspruch 5, **dadurch gekennzeichnet, daß** die feststehenden (52) und die beweglichen Elemente (54) Aussparungen sind **und daß** sie ein ergänzendes Halteelement (66) umfaßt, welches aus einem kreisbogenförmigen Kranzteil besteht, das es ermöglicht, die Vorformlinge (1) zwischen den Aussparungen und dem Ergänzungselement an ihrem Bund (11) zwischen dem Zeitpunkt ihrer Freigabe und dem Zeitpunkt zu halten, zu welchem sie nach Modifizierung des Abstands von den ersten Übergabemitteln (5B) ergriffen werden.

7. Vorrichtung nach Anspruch 6, **dadurch gekennzeichnet, daß** der Drehteller (51) kreisförmig ist **und daß** die feststehenden Aussparungen (52) gleichmäßig verteilt und direkt in der Masse des Drehtellers an dessen Umfang ausgeführt sind.

8. Vorrichtung nach Anspruch 6, **dadurch gekennzeichnet, daß** die beweglichen Aussparungen (54) in drehbar am Drehteller angebrachten identischen Blättern (53) ausgeführt sind **und daß** sie Mittel (59, 62, 63) umfaßt, die bewegt werden, damit die Lage eines Blattes in bezug auf die feststehenden Aussparungen, die sich auf seinen beiden Seiten befinden, immer von der Position des Drehtellers (51) in bezug auf die Vorrichtung abhängig ist.

9. Vorrichtung nach Anspruch 8, **dadurch gekennzeichnet, daß** der Drehteller (51) in der Dicke gleichmäßig verteilte Sektoren enthält, welche identische radiale Vertiefungen (55) besitzen, die jeweils in den Zwischenräumen zwischen zwei aufeinanderfolgenden feststehenden Aussparungen (52) angebracht sind, **und daß** die Blätter in den radialen Vertiefungen angeordnet sind und die Höhe der Vertiefungen (55) derart ist, daß die feststehenden und die beweglichen Aussparungen die Vorformlinge auf derselben Höhe halten.

10. Vorrichtung nach Anspruch 9, **dadurch gekennzeichnet, daß** die Drehachsen (56) sämtlicher Blätter regelmäßig auf dem Drehteller (51) verteilt sind und einen Kreis begrenzen, der zur Drehachse (57) des Drehtellers (51) konzentrisch ist.

11. Vorrichtung nach einem der Ansprüche 8 bis 10, **dadurch gekennzeichnet, daß** die Blätter (53), um ihre Drehung und damit die Veränderung des Abstandes sicherzustellen, jeweils mit einer Kurbelwelle (59) verbunden sind, wobei ein erstes Ende (60) der mit einem Blatt verbundenen Kurbelwelle mit der Drehachse (56) dieses Blattes fest verbunden ist und ein zweites Ende (61) in eine Führungsnocke (62) eingreift, die mit dem Gestell der Vorrichtung fest verbunden ist.

12. Vorrichtung nach Anspruch 11, **dadurch gekennzeichnet, daß** die Nocke (62) aus einer Nut besteht, die einen geschlossenen Ring bildet, welcher aus der Dicke einer um die Antriebswelle (58) des Drehtellers (51) in einer zu diesem parallelen Ebene angeordneten feststehenden Scheibe (63) herausgearbeitet ist und Veränderungen in seinem Kurvenradius derart aufweist, daß, wenn der Drehteller (51) in Drehung versetzt wird, das zweite Ende (61) jeder Kurbelwelle (59) den Veränderungen der Kurve der in der feststehenden Scheibe angebrachten Nocke folgt, wodurch die Drehung des mit ihm verbundenen Blattes und damit eine Variierung des Abstands bewirkt wird.

13. Vorrichtung nach Anspruch 1, **dadurch gekennzeichnet, daß** die Übergabemittel (5B) aus mindestens einem ersten Arm (70) bestehen, von welchem ein erstes Ende so viele Greifmittel für die Vorformlinge wie Zangenpaare (73, 74) wie ein Werkzeug Hohlräume enthält trägt, wobei der Abstand zwischen den Mittelpunkten von zwei aufeinanderfolgenden Greifmitteln gleich dem (P2) zwischen den Längsachsen der beiden einander benachbarten Hohlräume ein und desselben Werkzeugs ist.

14. Vorrichtung nach einem der Ansprüche 1 bis 13, **dadurch gekennzeichnet, daß** sie zweite Übergabemittel (5C) zur Entnahme der Behälter (13) aus den Werkzeugen umfaßt.

15. Vorrichtung nach Anspruch 14, **dadurch gekennzeichnet, daß** die zweiten Übergabemittel (5C) aus mindestens einem zweiten Arm (85, 86, 87) bestehen, von welchem ein erstes Ende so viele Greifmittel für die Behälter (13) wie Zangenpaare wie ein Werkzeug Hohlräume enthält trägt, wobei der Abstand zwischen den Mittelpunkten von zwei aufeinanderfolgenden Greifmitteln gleich dem (P2) zwischen den Längsachsen der beiden einander benachbarten Hohlräume ein und desselben Werkzeugs ist.

16. Vorrichtung nach Anspruch 13 oder 15, **dadurch gekennzeichnet, daß** die Greifinittel (73, 74) für die Vorformlinge von einer ersten Halterung (72), die am ersten Ende des ersten Arms (70) drehbar angebracht ist, getragen werden und/oder die Greifinittel für die Behälter (13) von einer zweiten Halterung (89, 90, 91), die am ersten Ende des zweiten Arms (85, 86, 87) drehbar angebracht ist, getragen werden.

17. Vorrichtung nach Anspruch 16, **dadurch gekennzeichnet, daß** das zweite Ende des ersten Arms (70) auf einer dritten Halterung (75) angebracht ist, welche sich um eine Achse (750) dreht, die zu der des die Werkzeuge tragenden Karussells (4) parallel ist, und/oder das erste Ende des zweiten Arms auf einer vierten Halterung (88) angebracht ist, die sich um eine Achse (880) dreht, die zu der des die Werkzeuge tragenden Karussells parallel ist, **und daß** sie Mittel umfaßt, damit der erste (70) und/oder der zweite Arm (85, 86, 87) in bezug auf ihre jeweilige sich drehende Halterung Dreh- und Translationsbewegungen ausführt/ausführen.

18. Vorrichtung nach Anspruch 17, **dadurch gekennzeichnet, daß** die Drehbewegungen der ersten Halterung (72) der Greifmittel für die Vorformlinge (1) und/oder der zweiten Halterung (89, 90, 91) der Greifmittel für die Behälter (13) am ersten Ende des ersten und/oder zweiten Arms von Mitteln (79, 80; 890, 900, 910) gesteuert werden, die mit der jeweiligen sich drehenden Halterung verbunden sind.

19. Vorrichtung nach Anspruch 17 oder 18, **dadurch gekennzeichnet, daß** die Mittel, durch welche der erste und/oder der zweite Arm in bezug auf ihre jeweilige sich drehende Halterung Dreh- und Translationsbewegungen ausführt/ausführen, und/oder die Mittel, durch welche die Halterung jedes Greifmittels in bezug auf ihren jeweiligen Arm Drehbewegungen ausführt, aus Nocken (76, 77, 881, 882) bestehen, die von der jeweiligen sich drehenden Halterung getragen werden und auf ergänzende Organe wie Rollen und Schwingarme (80, 890, 900, 910) einwirken, die mit dem jeweiligen Arm verbunden sind.

20. Vorrichtung nach einem der Ansprüche 5 bis 19, **dadurch gekennzeichnet, daß** sie eine gerade Wärmebehandlungseinrichtung mit einer zwischen zwei Rädern (99, 100) gespannten endlosen Kette aus Drehscheiben (31) umfaßt, in welcher zwei aufeinanderfolgende Drehscheiben mit einem ersten Abstand (P1) beabstandet sind, **und daß** die Einrichtung zur Modifizierung des Abstands aus dem Drehteller (51) besteht, der auf seinem Umfang abwechselnd feststehende (52) und bewegliche Elemente (54) zum Halten der Vorformlinge enthält und unter einem der Räder koaxial dazu angeordnet ist und mit diesem angetrieben und derart betätigt wird, daß er zum Halten der Vorformlinge in der Aufnahmephase (102) und/oder zwischen der Freigabephase (105) und ihrem Ergriffen-Werden durch die ersten Übergabemittel eingesetzt werden kann.

21. Vorrichtung nach Anspruch 20, **dadurch gekennzeichnet, daß** die Mittel zur Modifizierung des Abstands betätigt werden, damit die feststehenden und die beweglichen Elemente zum Halten der Vorformlinge wenigstens in der Aufnahme- (102) und/oder der Freigabezone (105) mit dem ersten Abstand (P1) voneinander beabstandet sind.

22. Vorrichtung nach einem der Ansprüche 5 bis 19, **dadurch gekennzeichnet, daß** sie eine kreisförmige Wärmebehandlungseinrichtung mit einer von einem Karussell (106) getragenen endlosen Kette aus Drehscheiben umfaßt, in welcher zwei aufeinanderfolgende Drehscheiben mit einem ersten Abstand (P1) beabstandet sind, **und daß** die Einrichtung zur Modifizierung des Abstands aus dem Drehteller besteht, der auf seinem Umfang abwechselnd feststehende und bewegliche Elemente zum Halten der Vorformlinge enthält und am Rande des Karussells derart angeordnet ist, daß die Vorformlinge nach ihrer Freigabe (113) bis zu ihrem Ergriffen-Werden durch das zweite Übergabemittel (5B) erfaßt und gehalten werden.
